# EUROPEAN PATENT SPECIFICATION

(11) **EP 2 631 164 B1**
(45) Date of publication and mention of the grant of the patent: **16.04.2014**
(21) Application number: 13156931.1
(22) Date of filing: 27.02.2013
(51) Int. Cl.: B62K 27/04, B62J 1/28, B62J 27/00, B62K 19/30

(54) **Saddle-riding vehicle**
Sattelfahrzeug
Véhicule de type à enfourcher

(30) Priority: 27.02.2012 JP 2012039785
(43) Date of publication of application: 28.08.2013
(73) Proprietor: Yamaha Hatsudoki Kabushiki Kaisha, Iwata-shi, Shizuoka 438-8501 (JP)
(72) Inventor: Katano, Waturo, Iwata-shi, Shizuoka 438-8501 (JP)
(74) Representative: Grünecker, Kinkeldey, Stockmair & Schwanhäusser

(56) References cited:
- JP-A- 2009 161 013
- US-A1- 2009 107 751

## Description

The present invention relates to a saddle-riding vehicles according to the preamble of independent claim 1. Such a saddle-riding vehicle can be taken from the prior art document US 200910107751 A1. Said vehicle comprises left and right, rear side covers, respectively, extend rearward beyond a rear edge of the seat. A tail cowl positioned rearwardly of the seat bridges between rear ends of the rear side covers. A glove bar is mounted to the seat rails under the seat.

A saddle-riding vehicle such as a motorcycle or the like is provided with a grab bar. The grab bar is disposed to a rear portion of the vehicle. A grab bar, for example is gripped by a pillion rider sitting behind the driver. JP2009-161013A discloses a motorcycle provided with a grab bar. The motor cycle of JP2009-161013A is provided with left and right seat rails, left and right brackets, a supporting bar, an attaching table, a coupling plate, and a grab bar. The left and right brackets extend rearward from the rear ends of the left and right seat rails. The supporting bar is placed across the left and right brackets. The attaching table is welded to the supporting bar. The coupling plate is welded to the grab bar. The grab bar is fixed to the vehicle by the coupling plate and the attaching table being fixed using bolts. Further, the motorcycle of JP2009-161013A is provided with side covers and a tail cover. The side covers cover the supporting bar, the coupling plate, and the attaching table from the sides. The tail cover covers the supporting bar, the coupling plate, and the attaching table from the rear. A cover bracket is provided on top of the grab bar. The tail cover is fixed to the cover bracket. In addition, an opening is provided on the tail cover. The grab bar is inserted through the opening, and the gap between the grab bar and the opening is closed by a cap.

The following operations are made at the time of removing the grab bar in the motorcycle of JP2009-161013A. Firstly, the bolts are exposed by lifting up the seat. Next, the bolts are removed using a tool. Next, the grab bar, the side cover, and the tail cover are integrally detached from the seat rails.

In a saddle-riding vehicle, it is demanded that the grab bar is positioned as far to the rear as possible. For example, by positioning the grab bar towards the rear, it is possible to extend the seat rearward. Or else, by making the grab bar long, grasping the grab bar is made easy.

However, in the motorcycle of JP2009-161013A, it is difficult to place the grab bar further to the rear. As described above, in the motorcycle of JP2009-161013A, it is necessary to integrally detach the grab bar, the side cover, and the tail cover from the seat rails. Because of this, it is necessary to place the portions for fixing the grab bar and the supporting bar, that is, the bolts, at positions where they are accessible when the seat is lifted up. Further, it is necessary to place the bolts at positions where it is possible to remove the loosened bolts. In the motorcycle of JP2009-161013A, if the grab bar is positioned further towards the rear, the bolts get covered by the tail cover. In this case, accessing the bolts becomes difficult, or it becomes difficult to remove the bolts, and hence maintainability decreases.

Further, in the motorcycle of JP2009-161013A, the grab bar is fixed to the seat rails via the coupling plate, the attaching table, the supporting bar, and the bracket. Because of this, the structure for fixing the grab bar to the seat rails has become large in the up - down direction. Therefore, if the grab bar is placed further towards the rear, there is the problem that the rear portion of the vehicle becomes large in the up - down direction. Or else, since the rear wheel is placed below the seat rails, the structure for fixing the grab bar is likely to make the movable range narrow of the rear wheel in the up - down direction.

The problem to be the solved by the present invention is to provide a saddle-riding vehicle in which it is possible to place the grab bar further towards the rear than the conventional position while suppressing reduction in the maintainability and increase in the size of the rear portion of the vehicle in the up - down direction.

According to the present invention said object is solved by a saddle-riding vehicle having the features of independent claim 1. Preferred embodiments are laid down in the dependent claims.

A saddle-riding vehicle according to a first aspect includes a seat, a left supporting frame, a right supporting frame, a rear wheel, a left side cover, a right side cover, a tail cover, a cross member, and a grab bar. The left supporting frame and the right supporting frame support the seat. The rear wheel is placed below the left supporting frame and the right supporting frame. The left side cover is placed leftward of the left supporting frame. The right side cover is placed rightward of the right supporting frame. The tail cover is placed rearward of the seat and between the left side cover and the right side cover. The cross member is placed across the left supporting frame and the right supporting frame. The grab bar is attached to the cross member in a detachable and attachable manner. In the plan view of the vehicle, the tail cover is placed so as to at least partially overlap a portion for attaching the cross member and the grab bar. In the condition in which the side covers and the grab bar are attached to the vehicle, the tail cover is allowed to be attached to or detached from the vehicle.

The saddle-riding vehicle according to a second aspect is a saddle-riding vehicle according to the first aspect wherein, the grab bar includes a left gripping portion and a right gripping portion. The left gripping portion is placed outward of the left side cover. The right gripping portion is placed outward of the right side cover. The tail cover is placed between the left gripping portion and the right gripping portion.

The saddle-riding vehicle according to a third aspect is a saddle-riding vehicle according to the second aspect wherein, the left side cover includes a left cut portion in which an end portion of the left gripping portion is inserted. The right side cover includes a right cut portion in which an end portion of the right gripping portion is inserted.

The saddle-riding vehicle according to a fourth aspect is a saddle-riding vehicle according to the third aspect wherein, a boundary line between the tail cover and the left side cover is positioned rightward of a left side end of the left cut portion. A boundary line between the tail cover and the right side cover is positioned leftward of a right side end of the right cut portion.

The saddle-riding vehicle according to a fifth aspect is a saddle-riding vehicle according to the first aspect wherein, the cross member includes a plate-like shape.

The saddle-riding vehicle according to a sixth aspect is saddle-riding vehicle according to the first aspect wherein, the cross member is fixed to a rear end of the left supporting frame and a rear end of the right supporting frame.

The saddle-riding vehicle according to a seventh aspect is a saddle-riding vehicle according to the sixth aspect wherein, a rear end of the cross member is positioned rearward of the rear ends of the left supporting frame and the right supporting frame.

The saddle-riding vehicle according to an eighth aspect is a saddle-riding vehicle according to the first aspect wherein, rear portions of the left supporting frame and the right supporting frame include upwardly curved shapes.

The saddle-riding vehicle according to a ninth aspect is a saddle-riding vehicle according to the second aspect wherein, the grab bar further includes a left attaching portion and a right attaching portion. The left attaching portion is connected to the left gripping portion and is attached to the cross member. The right attaching portion is connected to the right gripping portion and is attached to the cross member. The left attaching portion includes an upwardly curved shape. The right attaching portion includes an upwardly curved shape.

The saddle-riding vehicle according to a tenth aspect is a saddle-riding vehicle according to the second aspect wherein, the grab bar further includes a left attaching portion and a right attaching portion. The left attaching portion is connected to the left gripping portion and is attached to the cross member. The right attaching portion is connected to the right gripping portion and is attached to the cross member. The left attaching portion includes a shape that is extended rearward from the cross member. The right attaching portion includes a shape that is extended rearward from the cross member.

The saddle-riding vehicle according to an eleventh aspect is a saddle-riding vehicle according to the first aspect wherein, a rear portion of the grab bar is attached to the cross member in an attachable and detachable manner. A front portion of the grab bar is attached to the left supporting frame and the right supporting frame in an attachable and detachable manner.

The saddle-riding vehicle according to a twelfth aspect is a saddle-riding vehicle according to the first aspect wherein, the tail cover is attached to the cross member. A portion of attaching the tail cover and the cross member is positioned forward of a portion of attaching the grab bar and the cross member.

The saddle-riding vehicle according to a thirteenth aspect is a saddle-riding vehicle according to the twelfth aspect wherein, a fixing member for fixing the tail cover and the cross member in the portion for attaching is positioned forward of the tail cover.

The saddle-riding vehicle according to a fourteenth aspect is a saddle-riding vehicle according to the second aspect wherein, the grab bar further includes a rear left attaching portion, a front left attaching portion, a rear right attaching portion, and a front right attaching portion. The rear left attaching portion is connected to a rear portion of the left gripping portion, and is attached to the cross member. The front left attaching portion is connected to a front portion of the left gripping portion, and is attached to the left supporting frame. The rear right attaching portion is connected to a rear portion of the right gripping portion, and is attached to the cross member. The front right attaching portion is connected to a front portion of the right gripping portion, and is connected to the right supporting frame. A front end of the left gripping portion is positioned forward of the left attaching portion. A front end of the right gripping portion is positioned forward of the right attaching portion.

The saddle-riding vehicle according to a fifteenth aspect is a saddle-riding vehicle according to the second aspect wherein, the grab bar includes a left grab bar and a right grab bar which are mutually separate parts. The left grab bar includes the left gripping portion. The right grab bar includes the right gripping portion.

### Advantageous Effects of the Invention

In the saddle-riding vehicle according to the first aspect, the tail cover is at least partially overlapping the portion for attaching the cross member and the grab bar. Because of this, it is possible to place the grab bar more towards the rear than is conventionally done. Further, it is possible to remove the tail cover without removing the side covers and the grab bar from the vehicle. Because of this, even if the grab bar is placed more towards the rear than is conventionally done, reduction in the maintainability is suppressed. In addition, since the grab bar is attached to the cross member, it is possible to suppress the rear portion of the vehicle from becoming large in the up - down direction than is conventional.

In the saddle-riding vehicle according to the second aspect, since the tail cover is placed between the left gripping portion and the right gripping portion, it is possible to remove easily the tail cover without interference with the left gripping portion and the right gripping portion.

In the saddle-riding vehicle according to the third aspect, compared to the case in which the holes for passing through the end portion of the left gripping portion and the end portion of the right gripping portion are formed in the tail cover, it is easy to detach the tail cover without being interfered by the left gripping portion and the right gripping portion.

In the saddle-riding vehicle according to the fourth aspect, compared to the case in which the holes for passing through the end portion of the left gripping portion and the end portion of the right gripping portion are formed in the tail cover, it is easy to detach the tail cover without being interfered by the left gripping portion and the right gripping portion.

In the saddle-riding vehicle according to the fifth aspect, it is possible to make the rear portion of the vehicle smaller in the up - down direction than in the conventional cases.

In the saddle-riding vehicle according to the sixth aspect, it is possible to place the grab bar further towards the rear than in the conventional cases.

In the saddle-riding vehicle according to the seventh aspect, it is possible to it is possible to place the grab bar further towards the rear than in the conventional cases.

In the saddle-riding vehicle according to the eighth aspect, it is possible to make higher the position of attaching the grab bar without additional parts. Because of this, the pillion rider can grip the grab bar easily.

In the saddle-riding vehicle according to the ninth aspect, it is possible to make high the positions of the left and right gripping portions. Because of this, the pillion rider can grip the grab bar easily.

In the saddle-riding vehicle according to the tenth aspect, the left and right attaching portions include shapes in which extend rearward from the cross member. Because of this, it is possible to place the grab bar further towards the rear.

In the saddle-riding vehicle according to the eleventh aspect, it is possible to attach or detach the front portion and the rear portion of the grab bar easily. Because of this, maintenance is easy.

In the saddle-riding vehicle according to the twelfth aspect, in the state in which the grab bar is attached to the cross member, it is easily possible to take a tool close to the portion of attaching the tail cover and the cross member. Because of this, it is possible to detach the tail cover easily.

In the saddle-riding vehicle according to the thirteenth aspect, in the state in which the grab bar is attached to the cross member, it is easily possible to take a tool close to the fixing member without being interfered by the tail cover. Because of this, it is possible to detach the tail cover easily.

In the saddle-riding vehicle according to the fourteenth aspect, it is possible to acquire long lengths of the left and right gripping portions. Further, it is possible to make small the distance between the front and rear attaching portions. Because of this, not only it is possible to increase the easy of gripping the left and right gripping portions, but also to acquire high fixing strengths.

In the saddle-riding vehicle according to the fifteenth aspect, the left grab bar and the right grab bar can be detached separately. Because of this, maintenance is easy.

### BRIEF DESCRIPTION OF THE DRAWINGS

- Fig. 1: is a side view drawing of a saddle-riding vehicle according to a preferred embodiment.
- Fig. 2: is an enlarged side view drawing of the rear portion of the saddle-riding vehicle.
- Fig. 3: is an enlarged plan view drawing of the rear portion of the saddle-riding vehicle.
- Fig. 4: is a perspective view drawing showing the attaching structure of a grab bar.
- Fig. 5: is a plan view drawing showing the attaching structure of the grab bar.
- Fig. 6: is a side view drawing showing the attaching structure of the grab bar.
- Fig. 7: is a perspective view drawing showing the attaching structure of the grab bar in the state in which the grab bar is detached.
- Fig.8: is an exploded perspective view drawing of a vehicle body cover.
- Fig.9: is a plan view drawing showing the rear portion of the vehicle in the state in which the seat is lifted up.
- Fig. 10: is a plan view drawing showing the rear portion of the vehicle in the state in which the tail cover is detached.
- Fig.11: is an enlarged plan view drawing of the rear portion of a saddle-riding vehicle according to another preferred embodiment.

### DETAILED DESCRIPTION OF THE EMBODIMENTS

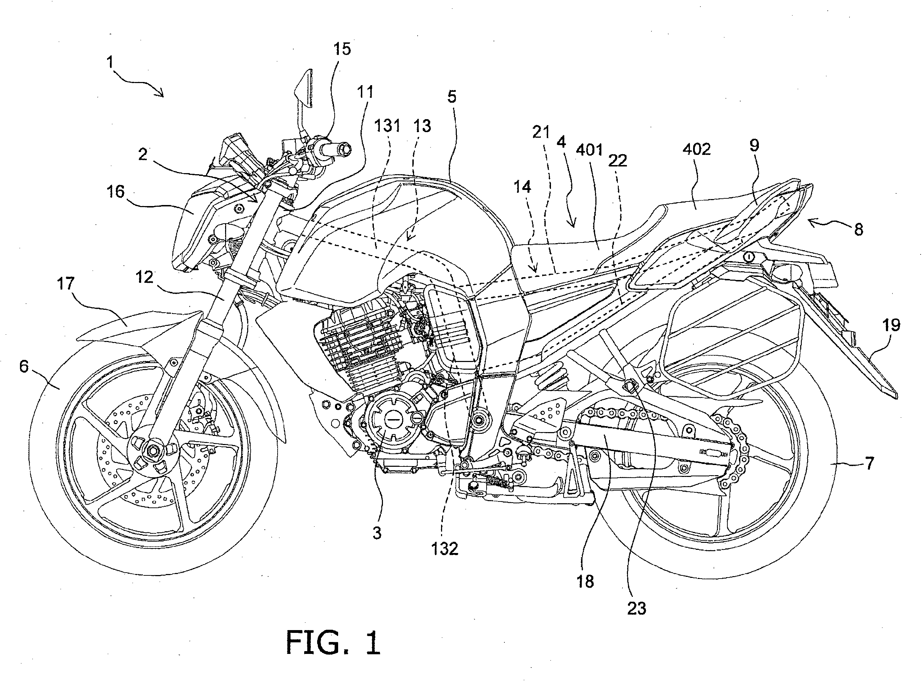

In the following, saddle-riding vehicles according to some preferred embodiments are described with reference to the drawings. Fig. 1 is a side view drawing of a saddle-riding vehicle 1 according to the present preferred embodiment. The saddle-riding vehicle 1 is a motorcycle. The saddle-riding vehicle 1 is provided with a vehicle body frame 2, an engine 3, a seat 4, a fuel tank 5, a front wheel 6, a rear wheel 7, a vehicle body cover 8, and a grab bar 9. Further, in the following descriptions, the front - rear direction is the vehicle body front - rear direction as viewed by a rider seated on the seat 4. The left - right direction is the vehicle body left - right direction as viewed by a rider seated on the seat 4.

The vehicle body frame 2 includes a head pipe 11, a front fork 12, a front frame portion 13, and a rear frame portion 14. The front fork 12 is supported in a rotatable manner by the head pipe 11. A handle 15 is fixed at the top end of the front fork 12. A headlight unit 16 is positioned at the front of the head pipe 11. The front wheel 6 is supported in a rotatable manner by the bottom end of the front fork 12.

The front frame portion 13 is constituted from a pipe shaped member. The front frame portion 13 includes a first front frame 131 and a second front frame 132. The first front frame 131 is connected to the head pipe 11 and extends rearward from the head pipe 11. The second front frame 132 extends from the rear end of the first front frame 131 in an oblique rearward and downward direction. At the bottom end of the second front frame 132 is coupled a swing arm 18 so that it can swing up and down. By the rear end of the swing arm 18 is supported the rear wheel 7 in a rotatable manner.

The rear frame portion 14 constituted from a pipe shaped member. The rear frame portion 14 is connected to the front frame portion 13 and extends rearward from the front frame portion 13. The rear frame portion 14 is positioned above the rear wheel 7. The rear frame portion 14 includes a top rear frame 21 and a bottom rear frame 22. The top rear frame 21 is connected to the second front frame 132, and extends rearward from the second front frame 132. The bottom rear frame 22 is positioned below the top rear frame 21. The bottom rear frame 22 is connected to the second front frame 132 and extends rearward from the second front frame 132. The rear end of the bottom rear frame 22 is connected to the top rear frame 21.

The seat 4 and the fuel tank 5 are mounted to a upper portion of the vehicle body frame 2. The fuel tank 5 is positioned in front of the seat 4. The fuel tank 5 is positioned above the first front frame 131. The seat 4 is positioned above the rear frame portion 14. The seat 4 includes a main seat portion 401 and a tandem seat portion 402. The main seat portion 401 is positioned at the rear of the fuel tank 5. The tandem seat portion 402 is positioned behind the main seat portion 401. The top surface of the tandem seat portion 402 is positioned higher than the top surface of the main seat portion 401. A tandem step 23 is positioned below the seat 4. The tandem step 23 is the part on which the pillion rider places his/her feet. The tandem step 23 is connected to the bottom rear frame 22.

The engine 3 transmits driving force to the rear wheel 7 via a chain. The engine 3 is positioned below the fuel tank 5, and is supported by the front frame portion 13. A front fender 17 is positioned above the front wheel 6. A rear fender 19 is positioned above the rear wheel 7.

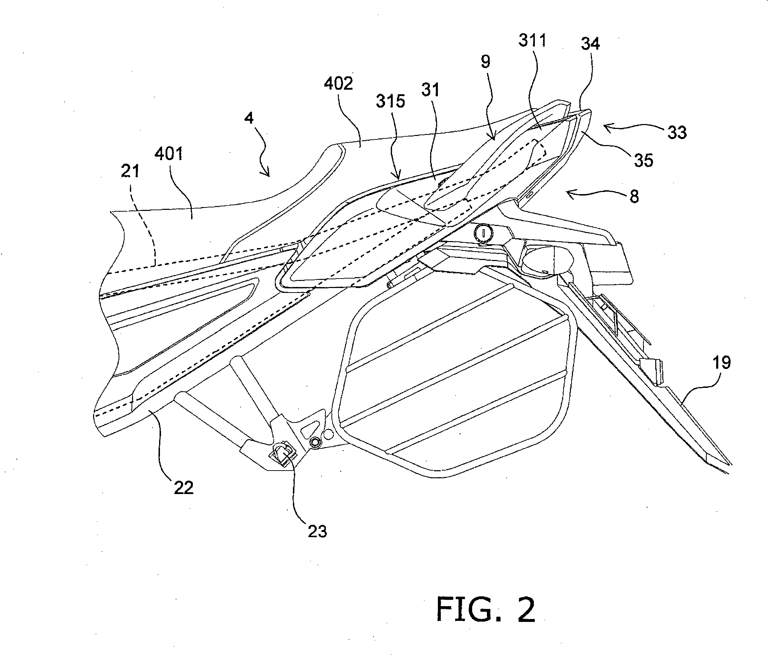

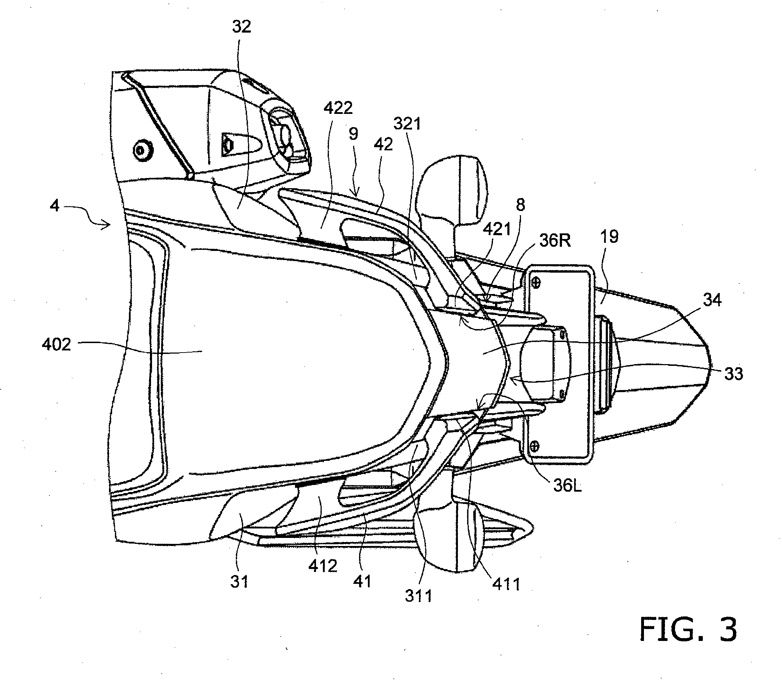

Fig. 2 is an enlarged side view drawing of the rear portion of the saddle-riding vehicle 1. Fig. 3 is an enlarged plan view drawing of the rear portion of the saddle-riding vehicle 1. As is shown in Fig. 2 and Fig. 3, the vehicle body cover 8 covers the rear portion of the vehicle body frame 2. The vehicle body cover 8 includes a left side cover 31, a right side cover 32, and a tail cover 33. The constitution of each cover is described in detail later.

The grab bar 9 is the portion gripped by the pillion rider. The grab bar 9 is made of resin. As is shown in Fig. 3, the grab bar 9 includes a left gripping portion 41 and a right gripping portion 42. The left gripping portion 41 is positioned outward of the left side cover 31. The left gripping portion 41 includes a rear portion 411 and a front portion 412. The rear portion 411 of the left gripping portion 41 is positioned so as to project upwards from the left side cover 31. The front portion 412 of the left gripping portion 41 is positioned so as to project leftward from the left side cover 31. The right gripping portion 42 is positioned outward of the right side cover 32. The right gripping portion 42 includes a rear portion 421 and a front portion 422. The rear portion 421 of the right gripping portion 42 is positioned so as to project upwards from the right side cover 32. The front portion 422 of the right gripping portion 42 is positioned so as to project rightward from the right side cover 32.

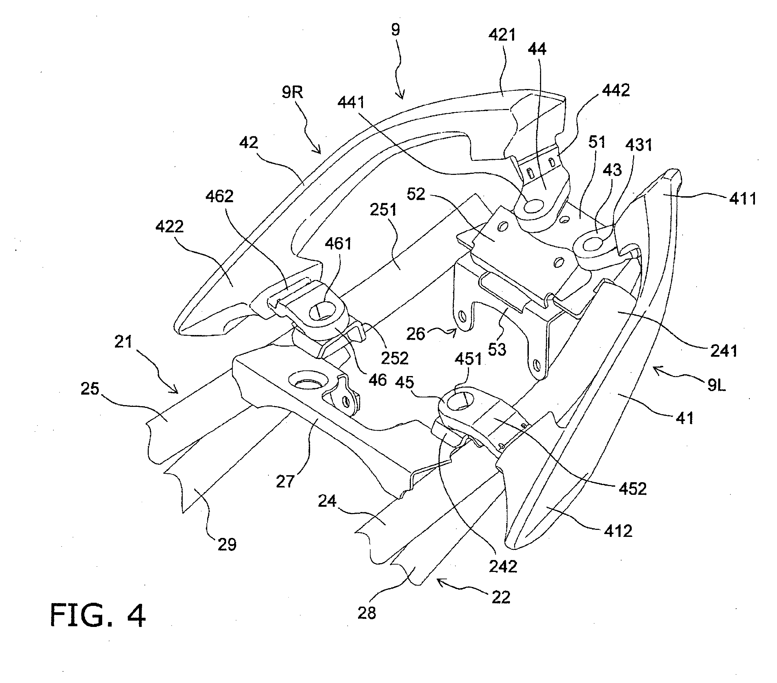

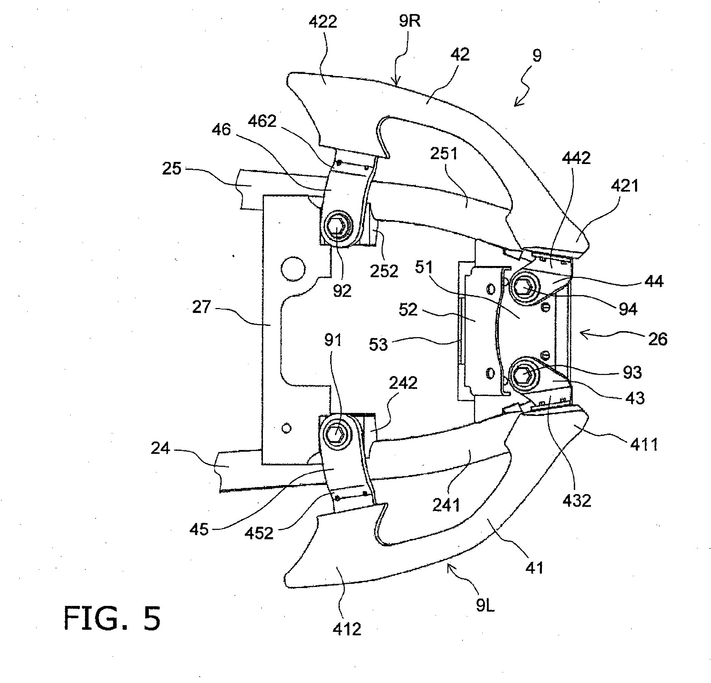

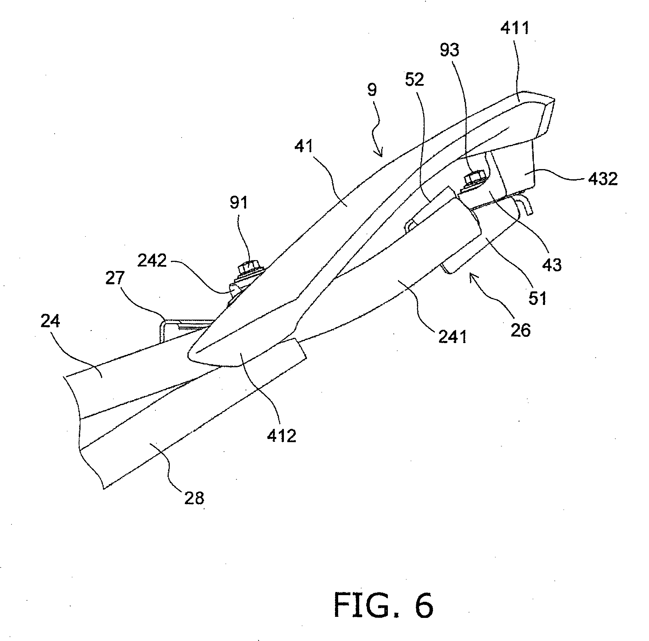

Fig. 4 is a perspective view drawing showing the attaching structure of the grab bar 9. Fig. 5 is a plan view drawing showing the attaching structure of the grab bar 9. Fig. 6 is a side view drawing showing the attaching structure of the grab bar 9. Further, in Fig. 4, in order to make it easy to understand, the bolts for attaching the grab bar 9 has been omitted. As is shown in Fig. 4, the grab bar 9 is supported by the top rear frame 21. The top rear frame 21 includes a left supporting frame 24, a right supporting frame 25, a first cross member 26, and a second cross member 27. Further, the above-mentioned bottom rear frame 22 includes a bottom left frame 28 and a bottom right frame 29. The bottom left frame 28 is positioned below the left supporting frame 24. The bottom right frame 29 is positioned below the right supporting frame 25.

The left supporting frame 24 and the right supporting frame 25 support the seat 4. The left supporting frame 24 and the right supporting frame 25 are positioned so that they are mutually separated in the vehicle width direction. The above-mentioned rear wheel 7 is positioned below the left supporting frame 24 and the right supporting frame 25. The left supporting frame 24 extends towards the rear. As is shown in Fig. 6, the rear portion 241 of the left supporting frame 24 includes an upward curving shape. The rear end of the left supporting frame 24 is positioned rearward of the rear end of the bottom left frame 28. The right supporting frame 25 is positioned to be in left - right symmetry with the left supporting frame 24. Therefore, the rear portion 251 of the right supporting frame 25, similar to the rear portion 241 of the left supporting frame 24, includes an upward curving shape. In addition, the rear end of the right supporting frame 25 is positioned rearward of the rear end of the bottom right frame 29.

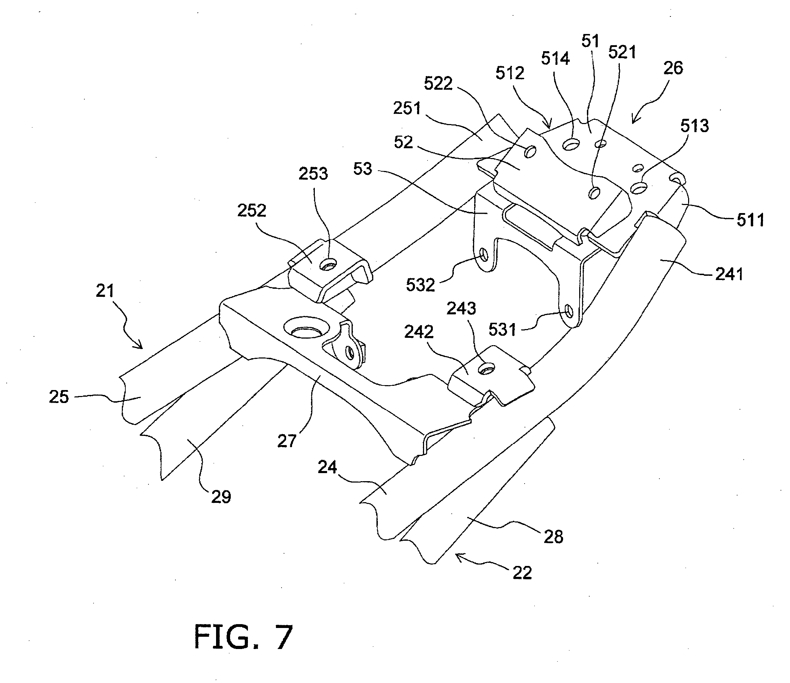

Fig. 7 is a perspective view drawing showing the attaching structure of the grab bar 9 in the state in which the grab bar 9 is detached. As is shown in Fig. 7, the left supporting frame 24 includes a left grab bar attaching portion 242. The right supporting frame 25 includes a right grab bar attaching portion 252. The left grab bar attaching portion 242 and the right grab bar attaching portion 252 are the parts to which the grab bar 9 is attached. The left grab bar attaching portion 242 is fixed to the pipe shaped member of the left supporting frame 24. The right grab bar attaching portion 252 is fixed to the pipe shaped member of the right supporting frame 25. The left grab bar attaching portion 242 includes a left attaching hole 243. The left attaching hole 243 penetrates through the left grab bar attaching portion 242. The right grab bar attaching portion 252 includes a right attaching hole 253. The right attaching hole 253 penetrates through the right grab bar attaching portion 252. As is shown in Fig. 5, a bolt 91 for attaching the grab bar 9 is passed through the left attaching hole 243. A bolt 92 for attaching the grab bar 9 is passed through the right attaching hole 253.

The first cross member 26 is positioned across the left supporting frame 24 and the right supporting frame 25. The first cross member 26 is fixed to the rear end of the left supporting frame 24 and to the rear end of the right supporting frame 25. The first cross member 26 includes the shape of a plate. The first cross member 26 includes a shape that is curved at a plurality of locations. The first cross member 26 includes a grab bar fixing portion 51, a tail cover fixing portion 52, and a rear fender fixing portion 53.

The grab bar fixing portion 51 is the part to which the grab bar 9 is fixed. The grab bar fixing portion 51 is fixed to the rear end of the left supporting frame 24 and to the rear end of the right supporting frame 25. For example, the grab bar fixing portion 51 is welded to the left supporting frame 24 and to the right supporting frame 25. The top surface of the grab bar fixing portion 51 includes a flat shape. The left side portion 511 and the right side portion 512 of the grab bar fixing portion 51 are bent towards below. The rear end of the grab bar fixing portion 51 is positioned rearward of the rear end of the left supporting frame 24 and the rear end of the right supporting frame 25. Therefore, as is shown in Fig. 6, the rear end of the first cross member 26 is positioned rearward of the rear end of the left supporting frame 24 and of the right supporting frame 25. As is shown in Fig. 7, the grab bar fixing portion 51 includes a first left hole 513 and a first right hole 514. The first left hole 513 and the first right hole 514 penetrate through the grab bar fixing portion 51. As is shown in Fig. 5, a bolt 93 for fixing the grab bar 9 is passed through the first left hole 513. A bolt 94 for fixing the grab bar 9 is passed through the first right hole 514.

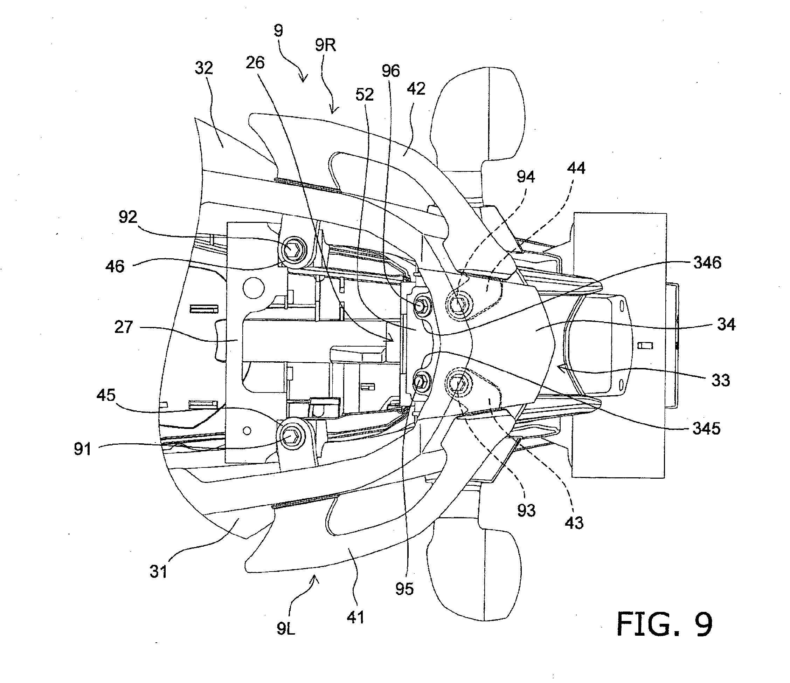

The tail cover fixing portion 52 is the portion for fixing the tail cover 33. The tail cover fixing portion 52 is positioned above the front portion of the grab bar fixing portion 51. The top surface of the tail cover fixing portion 52 is inclined with respect to the top surface of the grab bar fixing portion 51. The tail cover fixing portion 52 includes holes for fixing the tail cover 33. In concrete terms, the tail cover fixing portion 52 includes a second left hole 521 and a second right hole 522. The second left hole 521 and the second right hole 522 penetrate through the tail cover fixing portion 52. A bolt 95 (see Fig. 9) for fixing the tail cover 33 is passed through the second left hole 521. A bolt 96 (see Fig. 9) for fixing the tail cover 33 is passed through the second right hole 522. The second left hole 521 and the second right hole 522 are positioned forward of the first left hole 513 and the first right hole 514.

The rear fender fixing portion 53 is a portion for fixing the rear fender 19. The rear fender fixing portion 53 extends downward from the front portion of the grab bar fixing portion 51. The rear fender fixing portion 53 includes holes for fixing the rear fender 19. In concrete terms, the rear fender fixing portion 53 includes a third left hole 531 and a third right hole 532. The third left hole 531 and the third right hole 532 penetrate through the rear fender fixing portion 53. Bolts (not shown in the figure) for fixing the rear fender 19 are passed through the third left hole 531 and the third right hole 532.

The second cross member 27 is positioned across the left supporting frame 24 and the right supporting frame 25. The second cross member 27 is positioned forward of the first cross member 26. The second cross member 27 is fixed to the left supporting frame 24 and to the right supporting frame 25. The second cross member 27 is positioned in front of the left grab bar attaching portion 242 and the right grab bar attaching portion 252. The second cross member 27 includes a plate-like shape. The second cross member 27 includes a shape that is curved at a plurality of locations.

As is shown in Fig. 4, the rear portion of the grab bar 9 is attached to the first cross member 26 in an attachable and detachable manner. The front portion of the grab bar 9 is attached to the left supporting frame 24 and the right supporting frame 25 in an attachable and detachable manner. In concrete terms, as is shown in Fig. 5, the rear portion of the grab bar 9 is attached to the first cross member 26 by bolts 93 and 94. The front portion of the grab bar 9 is attached to the left supporting frame 24 and to the right supporting frame 25 by bolts 91 and 92. The grab bar 9 includes a left grab bar 9L and a right grab bar 9R which are mutually separate parts. The left grab bar 9L includes the above-described left gripping portion 41. The right grab bar 9R includes the above-described right gripping portion 42. The grab bar 9 further includes a rear left attaching portion 43, a rear right attaching portion 44, a front left attaching portion 45, and a front right attaching portion 46.

The rear left attaching portion 43 is connected to the rear portion 411 of the left gripping portion 41. The rear left attaching portion 43 is attached to the first cross member 26. In concrete terms, the rear left attaching portion 43 is attached to the grab bar fixing portion 51. As is shown in Fig. 4, the rear left attaching portion 43 includes a hole 431. As is shown in Fig. 5, a bolt 93 is passed through the hole 431. The rear left attaching portion 43 includes a shape that extends towards the rear from the first cross member 26. In concrete terms, the rear left attaching portion 43 extends towards an oblique rear left direction. The rear left attaching portion 43 includes a curved portion 432, and includes an upwardly curved shape. The rear right attaching portion 44 is connected to the rear portion 421 of the right gripping portion 42. The rear right attaching portion 44 is attached to the first cross member 26. In concrete terms, the rear right attaching portion 44 is attached to the grab bar fixing portion 51. As is shown in Fig. 4, the rear right attaching portion 44 includes a hole 441. As is shown in Fig. 5, a bolt 94 is passed through the hole 441. The rear right attaching portion 44 includes a shape that extends towards the rear from the first cross member 26. In concrete terms, the rear right attaching portion 44 extends towards an oblique rear right direction. The rear right attaching portion 44 includes a curved portion 442, and includes an upwardly curved shape.

The front left attaching portion 45 is connected to the front portion 412 of the left gripping portion 41. In concrete terms, the front left attaching portion 45 is attached to the left supporting frame 24. The front left attaching portion 45 is connected to the left gripping portion 41 at a position that is positioned rearward of the front end of the left gripping portion 41. Therefore, the front end of the left gripping portion 41 is positioned forward of the front left attaching portion 45. The front left attaching portion 45 is attached to the left grab bar attaching portion 242. As is shown in Fig. 4, the front left attaching portion 45 includes a hole 451. As is shown in Fig. 5, a bolt 91 is passed through the hole 451. The front left attaching portion 45 includes a shape that extends leftward from the left grab bar attaching portion 242. The front left attaching portion 45 includes a left curved portion 452. The front left attaching portion 45 includes a shape that is downwardly curved in the left curved portion 452. Because of this, as is shown in Fig. 6, in the side view, the front portion 412 of the left gripping portion 41 is positioned lower than the top surface of the left supporting frame 24. In the side view, the front portion 412 of the left gripping portion 41 overlaps the left supporting frame 24.

The front right attaching portion 46 is connected to the front portion 422 of the right griping portion 42. In concrete terms, the front right attaching portion 46 is attached to the right supporting frame 25. The front right attaching portion 46 is connected to the right gripping portion 42 at a position that is positioned rearward of the front end of the right gripping portion 42. Therefore, the front end of the right gripping portion 42 is positioned forward of the front right attaching portion 46. The front right attaching portion 46 is attached to the right supporting frame 25. As is shown in Fig. 4, the front right attaching portion 46 includes a hole 461. As is shown in Fig. 5, a bolt 92 is passed through the hole 461. The front right attaching portion 46 includes a shape that extends rightward from the right grab bar attaching portion 252. The front right attaching portion 46 includes a right curved portion 462. The front right attaching portion 46 includes a shape that is downwardly curved in the right curved portion 462. Because of this, in the side view, the front portion 422 of the right gripping portion 42, similar to the front portion 412 of the left gripping portion 41, is positioned lower than the top surface of the right supporting frame 254. In the side view, the front portion 422 of the right gripping portion 42, similar to the front portion 412 of the left gripping portion 41, overlaps the right supporting frame 25.

As is shown in Fig. 3, the left side cover 31 and the right side cover 32 are positioned mutually separated in the vehicle width direction. The left side cover 31 and the right side cover 32 are positioned so that they are in left - right symmetry. The left side cover 31 is positioned leftward of the left supporting frame 24 mentioned above. The right side cover 31 is positioned rightward of the right supporting frame 25 mentioned above. As is shown in Fig. 2, in the side view, the left side cover 31 is positioned below the tandem seat portion 402. Even the right side cover 32, similar to the left side cover 31, is positioned below the tandem seat portion 402. As is shown in Fig. 3, in the plan view, the rear portion 311 of the left side cover 31 and the rear portion 321 of the right side cover 32 are positioned rearward of the seat 4.

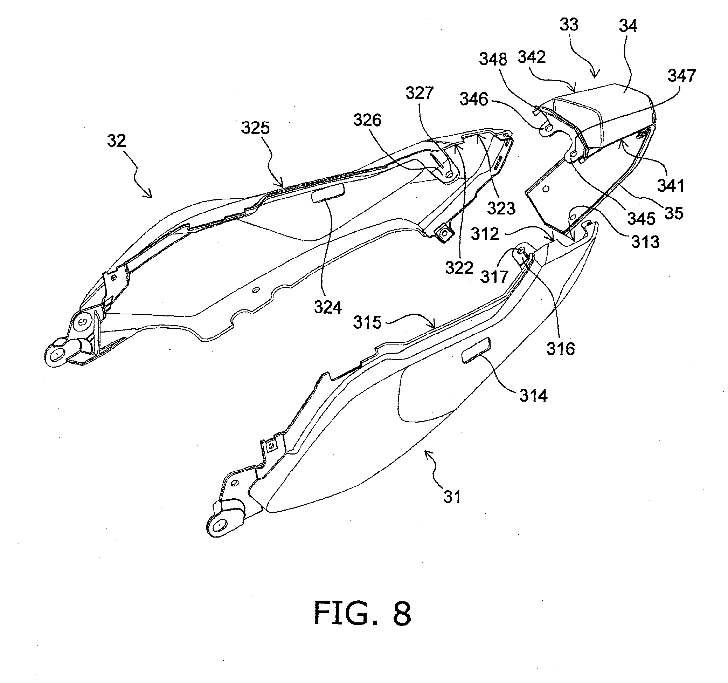

Fig. 8 is an exploded perspective view drawing of the left side cover 31, the right side cover 32, and the tail cover 33. As is shown in Fig. 8, the left side cover 31 includes a first end surface 312 and a left cut portion 313. The first end surface 312 is facing the tail cover 33. The left cut portion 313 includes a shape that is depressed towards the left from the first end surface 312. The rear portion 411 of the left gripping portion 41 is inserted in the left cut portion 313. The right side cover 32 includes a second end surface 322 and a right cut portion 323. The second end surface 322 is facing the tail cover 33. The right cut portion 323 includes a shape that is depressed towards the right from the second end surface 322. The rear portion 421 of the right gripping portion 42 is inserted in the right cut portion 323.

The left side cover 31 includes a left penetrating hole 314. The front portion 412 of the left gripping portion 41 is inserted through the left penetrating hole 314. The left penetrating hole 314 is positioned lower than the top edge portion 315 of the left side cover 31. The left penetrating hole 314 is positioned separated downwards from the top edge portion 315 of the left side cover. The left penetrating hole 314, in the side view, is positioned so as to overlap the left supporting frame 24 described above. The right side cover 32 includes a right penetrating hole 324. The front portion 422 of the right gripping portion 42 is inserted through the right penetrating hole 324. The right penetrating hole 324 is positioned to be in left - right symmetry with the left penetrating hole 314. Therefore, the right penetrating hole 324 is positioned lower than the top edge portion 325 of the right side cover 32. The right penetrating hole 324 is positioned separated downwards from the top edge portion 325 of the right side cover. The right penetrating hole 324, in the side view, is positioned so as to overlap the right supporting frame 25 described above.

The left side cover 31 includes a left fixing portion 316. The left fixing portion 316 is a portion for fixing the left side cover 31 to the tail cover fixing portion 52. The left fixing portion 316, along with the tail cover 33, is fixed to the tail cover fixing portion 52. The left fixing portion includes a hole 317. The hole 317 of the left fixing portion 316 is positioned at a position that overlaps the second left hole 521 (see Fig. 7) of the tail cover fixing portion 52 described above. The right side cover 32 includes a right fixing portion 326. The right fixing portion 326 is a portion for fixing the right side cover 32 to the tail cover fixing portion 52. The right fixing portion 326, along with the tail cover 33, is fixed to the tail cover fixing portion 52. The right fixing portion includes a hole 327. The hole 327 of the right fixing portion 326 is positioned at a position that overlaps the second right hole 522 (see Fig. 7) of the tail cover fixing portion 52 described above.

As is shown in Fig. 2 and Fig. 3, the tail cover 33 is positioned rearward of the seat 4. The tail cover 33 is positioned between the left side cover 31 and the right side cover 32. The tail cover 33 includes a curved shape that is projecting towards the rear. As is shown in Fig. 8, the tail cover 33 includes a top surface portion 34 and a rear surface portion 35. As is shown in Fig. 3, the top surface portion 34 is positioned between the rear portion 411 of the left gripping portion 41 and the rear portion 421 of the right gripping portion 42. The top surface portion 34, in the plan view, is positioned between the first end surface 312 of the left side cover 31 and the second end surface 322 of the right side cover 32. The left side surface 341 of the top surface portion 34 includes a straight line shape in the plan view. The left side surface 341 of the top surface portion 34 is facing the first end surface 312 of the left side cover 31. Therefore, as is shown in Fig. 3, the boundary line 36L between the tail cover 33 and the left side cover 31 is positioned rightward of the left cut portion 313. The right side surface 342 of the top surface portion 34 includes a straight line shape in the plan view. The right side surface 342 of the top surface portion 34 is facing the second end surface 322 of the right side cover 32. Therefore, as is shown in Fig. 3, the boundary line 36R between the tail cover 33 and the right side cover 32 is positioned leftward of the right cut portion 323. The top surface portion 34 includes a shape that is becoming narrow towards the rear. In other words, the spacing between the left side surface 341 and the right side surface 342 of the tope surface portion 34 becomes smaller towards the rear. Further, the tail cover 33 includes a first fixing portion 345 and a second fixing portion 346. The first fixing portion 345 and the second fixing portion 346 are projecting towards the rear from the top surface portion 34. The first fixing portion 345 and the second fixing portion 346 are fixed to the tail cover fixing portion 52. The first fixing portion 345 includes a hole 347. The hole 347 of the first fixing portion 345 is positioned so as to overlap the hole 317 of the left fixing portion 316 described above and the second left hole 521 of the tail cover fixing portion 52. The second fixing portion 346 includes a hole 348. The hole 348 of the second fixing portion 346 is positioned so as to overlap the hole 327 of the right fixing portion 326 described above and the second right hole 522 of the tail cover fixing portion 52. Because of the bolt 95 (see Fig. 9) described above passing through the hole 347 of the first fixing portion 345, the hole 317 of the left fixing portion 316, and the second left hole 521 of the tail cover fixing portion 52, the left side cover 31 and the tail cover 33 are fixed to the tail cover fixing portion 52. Because of the bolt 96 (see Fig. 9) described above passing through the hole 348 of the second fixing portion 346, the hole 327 of the right fixing portion 326, and the second right hole 522 of the tail cover fixing portion 52, the right side cover 32 and the tail cover 33 are fixed to the tail cover fixing portion 52. As is shown in Fig. 2, the rear surface

portion 35 is positioned below the top surface portion 34. The rear surface portion 35 is connected to the rear end of the top surface portion 34. The rear surface portion 35 is positioned rearward of the rear end of the left supporting frame 24 and the rear end of the right supporting frame 25.

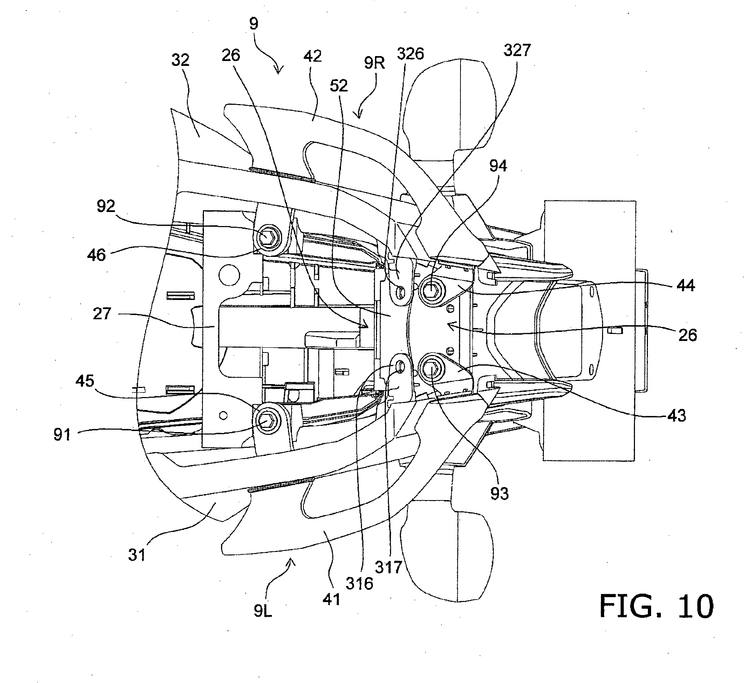

Fig. 9 is a plan view drawing showing the rear portion of the vehicle in the state in which the seat 4 has been lifted up. Fig. 10 is a plan view drawing showing the rear portion of the vehicle in the state in which the tail cover 33 has been detached. As is shown in Fig. 9 and Fig. 10, the tail cover 33 is attached to the first cross member 26. In concrete terms, the tail cover 33 is fixed to the tail cover fixing portion 52 in an attachable and detachable manner by means of the bolts 95 and 96. The tail cover 33 is positioned so that, in the plan view of the vehicle in the state in which the tail cover 33 has been attached, the tail cover 33 overlaps the portion for fixing the first cross member 26 and the grab bar 9. In other words, the tail cover 33 is positioned so that, in the plan view of the vehicle, the tail cover 33 overlaps the bolts 93 and 94 for fixing the first cross member 26 and the grab bar 9. On the other hand, the portion for fixing the tail cover 33 and the first cross member 26 is positioned forward of the portion for fixing the grab bar 9 and the first cross member 26. Therefore, as is shown in Fig. 9, the bolts 95 and 96 for fixing the tail cover 33 and the first cross member 26 are positioned, in the plan view, forward of the top surface portion 34 of the tail cover 33. Because of this, it is possible to take a tool close to the bolts 95 and 96 easily. In addition, it is easily possible to take out the loosened bolts 95 and 96 in the upward direction. Because of this, in the state in which the left and right side covers 31 and 32, and the grab bar 9 have been fixed to the vehicle, it is possible to attach or detach the tail cover 33 to or from the vehicle. In other words, as is shown in Fig. 10, in the state in which the left and right side covers 31 and 32, and the grab bar 9 have been fixed to the vehicle, it is possible to detach the tail cover 33 from the first cross member 26. In addition, in the state in which the left and right side covers 31 and 32, and the grab bar 9 have been fixed to the vehicle, it is possible to attach the tail cover 33 to the first cross member 26.

In a saddle-riding vehicle according to the present preferred embodiment, although the tail cover 33 is overlapping the portion of fixing the first cross member 26 and the grab bar 9, that is, the bolts 93 and 94, it is possible to detach the tail cover 33 from the vehicle without detaching the left and right side covers 31 and 32 and the grab bar 9 from the vehicle. Because of this, even if the position of the grab bar 9 is made more towards the rear than is conventional, it is possible to suppress reduction in the maintainability. Further, the grab bar 9 is fixed to the first cross member 26. Because of this, it is possible to suppress the rear portion of the vehicle from becoming large in the up - down direction more than in the conventional cases.

The left cut portion 313 in which the rear portion 411 of the left gripping portion 41 is inserted is formed in the left side cover 31. The right cut portion 323 in which the rear portion 421 of the right gripping portion 42 is inserted is formed in the right side cover 32. In addition, the boundary line 36L between the tail cover 33 and the left side cover 31 is positioned rightward of the left cut portion 313. The boundary line 36R between the tail cover 33 and the right side cover 32 is positioned leftward of the right cut portion 323. In other words, the tail cover 33 is positioned between the left gripping portion 41 and the right gripping portion 42. Because of this, it is easily possible to detach the tail cover 33 without being interfered by the left gripping portion 41 and the right gripping portion 42.

The first cross member 26 includes a plate-like shape. Because of this, it is possible to further suppress the rear portion of the vehicle from becoming large in the up - down direction more than in the conventional cases.

The first cross member 26 is fixed to the rear end of the left supporting frame 24 and the rear end of the right supporting frame 25. Further, the rear end of the first cross member 26 is positioned rearward of the rear ends of the left supporting frame 24 and the right supporting frame 25. Because of this, it is possible to position the grab bar 9 more towards the rear than in the conventional cases. Due to this, it is possible to make the grab bar 9 longer in the front - rear direction. As a result, it is possible to make the grab bar 9 easy to grip. Or else, without making the grab bar 9 short in the front - rear direction, it is possible to make the seat long in the front - rear direction. In particular, it is possible to make the tandem seat portion 402 long in the front - rear direction. Because of this, it is possible to enlarge the area of the tandem seat portion 402, and to enhance the riding comfort of the pillion rider.

The rear portion 241 of the left supporting frame 24 and the rear portion 251 of the right supporting frame 25 include shapes that are curved upward. Because of this, it is possible to make high the position of fixing the grab bar 9. In addition, the rear left attaching portion 43 and the rear right attaching portion 44 include shapes that are curved upward. Because of this, it is possible to make further high the position of fixing the grab bar 9. Due to this, it becomes easy for the pillion rider to grip the grab bar 9.

The rear left attaching portion 43 and the rear right attaching portion 44 include shapes that extend rearward from the first cross member 26. Because of this, it is possible to position the grab bar 9 more towards the rear than is done conventionally.

In the state in which the grab bar 9 has been fixed to the first cross member 26, it is possible to take a tool close to the bolts 95 and 96 fixing the tail cover 33 and the first cross member 26. In addition, it is easily possible to take out the bolts 95 and 96 that have been loosed using a tool. Because of this, it is possible to detach the tail cover 33 easily.

The rear portion of the grab bar 9 is attached to the first cross member 26 in an attachable and detachable manner. In addition, the front portion of the grab bar 9 is attached to the left supporting frame 24 and the right supporting frame 26 in an attachable and detachable manner. Because of this, it is possible to attach or detach the front portion and the rear portion of the grab bar 9 easily.

The front end of the left gripping portion 41 is positioned forward of the front left attaching portion 45. In addition, the front end of the right gripping portion 42 is positioned forward of the front right attaching portion 46. Because of this, it is possible to acquire large lengths of the left gripping portion 41 and the right gripping portion 42. In addition, it is possible to make smaller the distance between the front left attaching portion 45 and the rear left attaching portion 43, and the distance between the front right attaching portion 46 and the rear right attaching portion 44. Because of this, not only is it possible to enhance the ease of gripping the left and right gripping portions 41 and 42, but also, it is possible to acquire a high strength of fixing the grab bar 9.

The left grab bar 9L and the right grab bar 9R are separate parts. Therefore, it is possible to detach the left grab bar 9L and the right grab bar 9R separately. Because of this, maintenance of the rear portion of the vehicle is easy.

The front left attaching portion 45 and the front right attaching portion 46 include shapes that are curved downward. Further, the left penetrating hole 314 in which the front portion 412 of the left gripping portion 41 is inserted and the right penetrating hole 324 in which the front portion 422 of the right gripping portion 42 is inserted are positioned downwards of the top edge portions 315 and 324 of the left and right side covers 31 and 32. In the structure of a conventional side cover, the cut for passing the left and right gripping portions 41 and 42 are formed in the top edge portion of the left side cover and in the tope edge portion of the right side cover. Therefore, in the saddle-riding vehicle 1 according to the present preferred embodiment, because the penetrating holes 314 and 324 are formed as described above, it is possible to lower the positions of the front portion 412 of the left gripping portion 41 and the front portion 422 of the right gripping portion 42 more than is done in the conventional cases. Because of this, it is possible to make lower the positions of the front portion 412 of the left gripping portion 41 and the front portion 422 of the right gripping portion 42. Because of this, it is possible to make the left gripping portion 41 and the right gripping portion 42 long in the up - down direction. Because of this, it becomes still easier for the pillion rider to grip the grab bar 9.

Although a preferred embodiment was explained above, the present invention shall not be restricted by the above preferred embodiment, and various modifications can be made without deviating from the scope and intent of the invention.

A saddle-riding vehicle need not be limited to a motorcycle, and includes a three wheeler vehicle, an all-terrain vehicle, a snowmobile, or the like. In addition, a motorcycle need not be limited to a scooter but also includes a moped, or a sports type motorcycle.

In the above preferred embodiment, the tail cover 33 is positioned so as to overlap the entire portion of fixing the first cross member 26 and the grab bar 9. However, it is also possible to position the tail cover 33 so that it partially overlaps the portion of fixing the first cross member 26 and the grab bar 9.

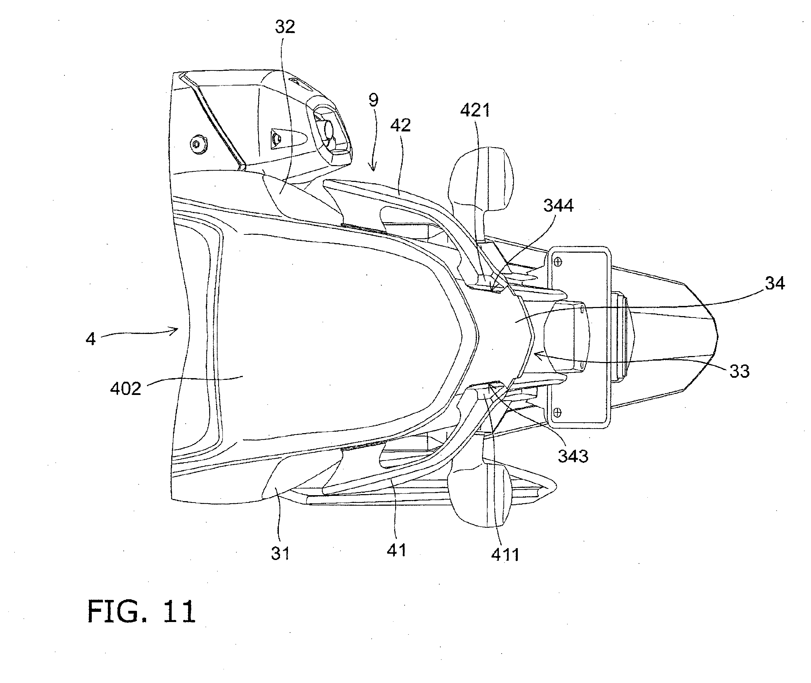

In the above preferred embodiment, the boundary line 36L between the tail cover 33 and the left side cover 31 is positioned rightward of the left cut portion 313. In addition, the boundary line 36R between the tail cover 33 and the right side cover 32 is positioned leftward of the right cut portion 323. However, it is sufficient if the boundary line 36L between the tail cover 33 and the left side cover 31 is positioned to the right of the left side edge of the left cut portion 313. It is sufficient if the boundary line 36R between the tail cover 33 and the right side cover 32 is positioned to the left of the right side edge of the right cut portion 323. For example, as is shown in Fig. 11, it is also possible if cuts 343 and 344 are formed respectively in the left side surface and the right side surface of the tail cover 33. In other words, it is also possible if the hole for inserting the rear portion 411 of the left gripping portion 41 is constituted by the left cut portion 313 of the left side cover 31 and the cut portion 343 of the left side surface of the tail cover 33. In addition, it is also possible if the hole for inserting the rear portion 421 of the right gripping portion 42 is constituted by the right cut portion 323 of the right side cover 32 and the cut portion 344 of the right side surface of the tail cover 33.

The fixing of the grab bar 9 need not be restricted to bolts, but it can also be fixed using other fixing means. For example, the grab bar 9 can also be fixed using screws. The fixing of the tail cover 33 need not be restricted to bolts, but it can also be fixed using other fixing means. For example, the tail cover 33 can also be fixed using screws.

In the above preferred embodiment, the left and right gripping portions 41 and 42 include the left grab bar 9L and the right grab bar 9R which are mutually separate parts. However, the left and right gripping portions 41 and 42 can also be formed integrally. In other words, the grab bar 9 can be constituted as a single part. In the above preferred embodiment, although the grab bar is made of resin, it can also be formed from other materials such as a metal.

## Claims

1. A saddle-riding vehicle comprising:
a seat (4);
a left supporting frame (24) and a right supporting frame (25) for supporting the seat (4);
a rear wheel (7) positioned below the left supporting frame (24) and the right supporting frame (25);
a left side cover (31) positioned leftward of the left supporting frame (24);
a right side cover (32) positioned rightward of the right supporting frame (25);
a tail cover (33) positioned rearward of the seat (4), and positioned between the left side cover (31) and the right side cover (32);
a cross member (26) positioned across the left side frame and the right side frame; and
a grab bar (9) attached to the cross member (26) in an attachable and detachable manner; **characterized in that** the tail cover (33), in the plan view of the vehicle, is placed so as to at least partially overlap a portion for attaching the cross member (26) and the grab bar (9); and
in a condition in which the side covers (31,32) and the grab bar (9) are attached to the vehicle, the tail cover (33) is allowed to be attached to or detached from the vehicle.

2. A saddle-riding vehicle according claim 1, **characterized in that** a rear portion of the grab bar (9) is attached to the cross member (26) in an attachable and detachable manner; and a front portion of the grab bar (9) is attached to the left supporting frame (24) and the right supporting frame (25) in an attachable and detachable manner.

3. A saddle-riding vehicle according to claim 1 or 2, **characterized in that** the tail cover (33) is attached to the cross member (26), and a portion for attaching the tail cover (33) and the cross member (26) is positioned forward of a portion for attaching the grab bar (9) and the cross member (26).

4. A saddle-riding vehicle according to at least one of the claims 1 to 3, **characterized in that** the grab bar (9) includes a left grab bar (9L) and a right grab bar (9R) which are mutually separate parts,
the left grab bar (9L) includes a left gripping portion (41); and,
the right grab bar (9R) includes a right gripping portion (42), the left gripping portion (41) is placed outward of the left side cover (31) and a right gripping portion (42) placed outward of the right side cover (32).

5. A saddle-riding vehicle according to claim 4, **characterized in that** the left grab bar (9L) includes a left attaching portion (43) connected to the left gripping portion (41) and attached to the cross member (26), and
the right grab bar (9R) includes a right attaching portion (44) connected to the right gripping portion (42) and attached to the cross member (26).

6. A saddle-riding vehicle according to claim 5, **characterized in that** the left attaching portion is a rear left attaching portion (43) connected to a rear portion of the left gripping portion (41) and attached to the cross member (26),
a front left attaching portion (45) of the left grab bar (9L) connected to a front portion of the left gripping portion (41) and attached to the left supporting frame (24),
the right attaching portion is a rear right attaching portion (44) connected to a rear portion of the right gripping portion (42) and attached to the cross member (26), and
a front right attaching portion (46) of the right grab bar (9R) is connected to a front portion of the right gripping portion (42) and attached to the right supporting frame (25);
a front end of the left gripping portion (41) is positioned forward of the left attaching portion; and
a front end of the right gripping portion (42) is positioned forward of the right attaching portion.

7. A saddle-riding vehicle according to claim 5 or 6, **characterized in that** the left attaching portion (43) includes an upwardly curved shape; and the right attaching portion (44) includes an upwardly curved shape.

8. A saddle-riding vehicle according to at least one of the claims 5 to 7, **characterized in that** the left attaching portion (43) includes a shape of extending rearward from the cross member (26); and the right attaching portion (44) includes a shape of extending rearward from the cross member (26).

9. A saddle-riding vehicle according to at least one of the claims 4 to 8, **characterized in that** the tail cover (33) is placed between the left gripping portion (41) and the right gripping portion (42).

10. A saddle-riding vehicle according to at least one of the claims 1 to 9, **characterized in that** the left side cover (31) includes a left cut portion (313) in which is inserted an end portion of the left gripping portion (41); and
the right side cover (32) includes a right cut portion (323) in which is inserted an end portion of the right gripping portion (42).

11. A saddle-riding vehicle according to claim 10, **characterized in that** a boundary line between the tail cover (33) and the left side cover (31) is positioned rightward of a left side end of the left cut portion (313); and
a boundary line between the tail cover (33) and the right side cover (32) is positioned leftward of a right side end of the right cut portion (323).

12. A saddle-riding vehicle according to at least one of the claims 1 to 11, **characterized in that** the cross member (26) includes a plate-like shape.

13. A saddle-riding vehicle according to at least one of the claims 1 to 12, **characterized in that** the cross member (26) is fixed to a rear end of the left supporting frame (24) and to a rear end of the right supporting frame (25), preferably a rear end of the cross member (26) is positioned rearward of the rear ends of the left supporting frame (24) and the right supporting frame (25).

14. A saddle-riding vehicle according to at least one of the claims 1 to 13, **characterized in that** rear portions of the left supporting frame (24) and the right supporting frame (25) include upwardly curved shapes.

15. A saddle-riding vehicle according to at least one of the claims 1 to 14, **characterized in that** a fixing member for fixing the tail cover (33) and the cross member (26) in the portion for attaching is positioned forward of the tail cover (33).

## Patentansprüche

1. Fahrzeug vom Spreizsitz- Typ, aufweisend:
einen Sitz (4),
einen linken Tragrahmen (24) und einen rechten Tragrahmen (25) zum Tragen des Sitzes (4);
ein Hinterrad (7), positioniert unter dem linken Tragrahmen (24) und dem rechten Tragrahmen (25);
eine linke Seitenabdeckung (31), positioniert weiter links des linken Tragrahmens (24);
eine rechte Seitenabdeckung (32), positioniert weiter rechts des rechten Tragrahmens (25);
eine Rückseitenabdeckung (33), positioniert weiter hinten des Sitzes (4) und positioniert zwischen der linken Seitenabdeckung (31) und der rechten Seitenabdeckung (32);
ein Querteil (26), positioniert quer über den linken Seitenrahmen und den rechten Seitenrahmen; und
eine Griffstange (9), befestigt an dem Querteil (26) in einer befestigbaren oder lösbaren Weise; **dadurch gekennzeichnet, dass** die Rückseitenabdeckung (33) in der Draufsicht des Fahrzeuges so platziert ist, um zumindest teilweise einen Abschnitt zum Befestigen des Querteils (26) und der Griffstange (9) zu überlappen; und
in einem Zustand, in dem die Seitenabdeckungen (31, 32) und die Griffstange (9) an dem Fahrzeug befestigt sind, gestattet ist, von dem Fahrzeug befestigt oder gelöst zu sein.

2. Fahrzeug vom Spreizsitz- Typ nach Anspruch 1, **dadurch gekennzeichnet, dass** ein hinterer Abschnitt der Griffstange (9) an dem Querteil (26) in einer befestigbaren oder lösbaren Weise befestigt ist, und ein vorderer Abschnitt der Griffstange (9) an dem linken Tragrahmen (24) und dem rechten Tragrahmen (25) in einer befestigbaren oder lösbaren Weise befestigt ist.

3. Fahrzeug vom Spreizsitz- Typ nach Anspruch 1 oder 2, **dadurch gekennzeichnet, dass** die Rückseitenabdeckung (33) an dem Querteil (26) befestigt ist und ein Abschnitt zum Befestigen der Rückseitenabdeckung (33) und des Querteils (26) weiter vorn eines Abschnittes zum Befestigen der Griffstange (9) und des Querteils (26) positioniert ist.

4. Fahrzeug vom Spreizsitz- Typ nach zumindest einem der Ansprüche 1 bis 3, **dadurch gekennzeichnet, dass** die Griffstange (9) eine linke Griffstange (9L) und eine rechte Griffstange (9R) enthält, die zueinander separate Teile sind,
wobei die linke Griffstange (9L) einen linken Griffabschnitt (41) enthält; und
die rechte Griffstange (9R) einen rechten Griffabschnitt (42) enthält, der linke Griffabschnitt (41) außerhalb der linken Seitenabdeckung (31) platziert ist und der rechte Griffabschnitt (42) außerhalb der rechten Seitenabdeckung (32) platziert ist.

5. Fahrzeug vom Spreizsitz- Typ nach Anspruch 4, **dadurch gekennzeichnet, dass** die linke Griffstange (9L) einen linken Befestigungsabschnitt (43), verbunden mit dem linken Griffabschnitt (41) und verbunden mit dem Querteil (26), enthält und die rechte Griffstange (9R) einen rechten Befestigungsabschnitt (44), verbunden mit dem rechten Griffabschnitt (42) und verbunden mit dem Querteil (26), enthält.

6. Fahrzeug vom Spreizsitz- Typ nach Anspruch 5, **dadurch gekennzeichnet, dass** der linke Befestigungsabschnitt ein hinterer linker Befestigungsabschnitt (43), verbunden mit einem hinteren Abschnitt des linken Griffabschnittes (41) und befestigt an dem Querteil (26), ist,
ein vorderer linker Befestigungsabschnitt (45) der linken Griffstange (9L), verbunden ist mit einem vorderen Abschnitt des linken Griffabschnittes (41) und befestigt an dem linken Tragrahmen (24),
der rechte Befestigungsabschnitt ein hinterer rechter Befestigungsabschnitt (44) ist, verbunden mit einem hinteren Abschnitt des rechten Griffabschnittes (42) und befestigt an dem Querteil (26), und
ein vorderer rechter Befestigungsabschnitt (46) der rechten Griffstange (9R) mit einem vorderen Abschnitt des rechten Griffabschnittes (42) verbunden und an dem rechten Tragrahmen (25) befestigt ist;
ein vorderes Ende des linken Griffabschnittes (41) weiter vorn des linken Befestigungsabschnittes positioniert ist; und
ein vorderes Ende des rechten Griffabschnittes (42) weiter vorn des rechten Befestigungsabschnittes positioniert ist.

7. Fahrzeug vom Spreizsitz- Typ nach Anspruch 5 oder 6, **dadurch gekennzeichnet, dass** der linke Befestigungsabschnitt (43) eine nach oben gekrümmte Form enthält; und der rechte Befestigungsabschnitt (44) eine nach oben gekrümmte Form enthält.

8. Fahrzeug vom Spreizsitz- Typ nach zumindest einem der Ansprüche 5 bis 7, **dadurch gekennzeichnet, dass** der linke Befestigungsabschnitt (43) eine sich nach hinten erstreckende Form von dem Querteil (26) enthält; und der rechte Befestigungsabschnitt (44) eine sich nach hinten erstreckende Form von dem Querteil (26) enthält.

9. Fahrzeug vom Spreizsitz- Typ nach zumindest einem der Ansprüche 4 bis 8, **dadurch gekennzeichnet, dass** die Rückseitenabdeckung (33) zwischen dem linken Griffabschnitt (41) und dem rechten Griffabschnitt (42) angeordnet ist.

10. Fahrzeug vom Spreizsitz- Typ nach zumindest einem der Ansprüche 1 bis 9, **dadurch gekennzeichnet, dass** die linke Seitenabdeckung (31) einen linken ausgeschnittenen Abschnitt (313) enthält, in dem ein Endabschnitt des linken Griffabschnittes (41) eingesetzt ist; und
die rechte Seitenabdeckung (32) einen rechten ausgeschnittenen Abschnitt (323) enthält, in dem ein Endabschnitt des rechten Griffabschnittes (42) eingesetzt ist.

11. Fahrzeug vom Spreizsitz- Typ nach Anspruch 10, **dadurch gekennzeichnet, dass** eine Grenzlinie zwischen der Rückseitenabdeckung (33) und der linken Seitenabdeckung (31) weiter rechts eines linken Seitenendes des linken ausgeschnittenen Abschnittes (313) positioniert ist; und
eine Grenzlinie zwischen der Rückseitenabdeckung (33) und der rechten Seitenabdeckung (32) weiter links eines rechten Seitenendes des rechten ausgeschnittenen Abschnittes (323) positioniert ist.

12. Fahrzeug vom Spreizsitz- Typ nach zumindest einem der Ansprüche 1 bis 11, **dadurch gekennzeichnet, dass** das Querteil (26) eine plattenartige Form enthält.

13. Fahrzeug vom Spreizsitz- Typ nach zumindest einem der Ansprüche 1 bis 12, **dadurch gekennzeichnet, dass** das Querteil (26)an einem hinteren Ende des linken Tragrahmens (24) und an einem hinteren Ende des rechten Tragrahmens (25) befestigt ist, wobei vorzugsweise ein hinteres Ende des Querteils (26) weiter hinten der hinteren Enden des linken Tragrahmens (24) und des rechten Tragrahmens (25) positioniert ist.

14. Fahrzeug vom Spreizsitz- Typ nach zumindest einem der Ansprüche 1 bis 13, **dadurch gekennzeichnet, dass** hintere Abschnitte des linken Tragrahmens (24) und des rechten Tragrahmens (25) nach oben gekrümmte Formen enthalten.

15. Fahrzeug vom Spreizsitz- Typ nach zumindest einem der Ansprüche 1 bis 14, **dadurch gekennzeichnet, dass** ein Befestigungsteil zum Befestigen der Rückseitenabdeckung (33) und des Querteils (26) in dem Abschnitt zum Befestigen weiter vorn der Rückseitenabdeckung (33) positioniert ist.

## Revendications

1. Véhicule à enfourcher comprenant :
un siège (4),
un cadre de support gauche (24) et un cadre de support droit (25) permettant de supporter le siège (4),
une roue arrière (7) positionnée en dessous du cadre de support gauche (24) et du cadre de support droit (25),
un casier gauche (31) positionné à la gauche du cadre de support gauche (24),
un casier droit (32) positionné à la droite du cadre de support droit (25),
un casier arrière (33) positionné à l'arrière du siège (4) et positionné entre le casier gauche (31) et le casier droit (32),
un élément de croisement (26) positionné au travers du cadre gauche et du cadre droit, et
une poignée de saisie (9) fixée à l'élément de croisement (26) en pouvant être fixée et détachée,
**caractérisé en ce que** le casier arrière (33), dans une vue en plan du véhicule, est placé de façon à chevaucher au moins partiellement une partie destinée à fixer l'élément de croisement (26) et la poignée de saisie (9), et
dans un état dans lequel les casiers latéraux (31, 32) et la poignée de saisie (9) sont fixés au véhicule, le casier arrière (33) pouvant être fixé au véhicule ou détaché de celui-ci.

2. Véhicule à enfourcher selon la revendication 1, **caractérisé en ce que** la partie arrière de la poignée de saisie (9) est fixée à l'élément de croisement (26) en pouvant être fixée ou détachée et **en ce que** la partie avant de la poignée de saisie (9) est fixée au cadre de support gauche (24) et au cadre de support droit (25) en pouvant être fixée et détachée.

3. Véhicule à enfourcher selon la revendication 1 ou 2, **caractérisé en ce que** le casier arrière (33) est fixé à l'élément de croisement (26), et **en ce qu'**une partie destinée à fixer le casier arrière (33) et l'élément de croisement (26) est placée en avant d'une partie destinée à fixer la poignée de saisie (9) et l'élément de croisement (26).

4. Véhicule à enfourcher selon au moins l'une des revendications 1 à 3, **caractérisé en ce que** la poignée de saisie (9) inclut une poignée de saisie gauche (9L) et une poignée de saisie droite (9R) qui sont des pièces mutuellement séparées,
la poignée de saisie gauche (9L) inclut une partie de préhension gauche (41), et,
la poignée de saisie droite (9R) inclut une partie de préhension droite (42), la partie de saisie gauche (41) étant placée à l'extérieur du casier gauche (31) et la partie de saisie droite (42) étant placée à l'extérieur du casier droit (32).

5. Véhicule à enfourcher selon la revendication 4, **caractérisé en ce que** la poignée de saisie gauche (9L) comprend une partie de fixation gauche (43) reliée à la partie de préhension gauche (41) et fixée à l'élément de croisement (26), et
la poignée de saisie droite (9R) inclut une partie de fixation droite (44) reliée à la partie de préhension droite (42) et fixée à l'élément de croisement (26).

6. Véhicule à enfourcher selon la revendication 5, **caractérisé en ce que** la partie de fixation gauche est une partie de fixation gauche arrière (43) reliée à une partie arrière de la partie de préhension gauche (41) et fixée à l'élément de croisement (26),
la partie de fixation gauche avant (45) de la poignée de saisie gauche (9L) étant reliée à une partie avant de la partie de préhension gauche (41) et fixée au cadre de support gauche (24),
la partie de fixation droite avant est une partie de fixation droite arrière (44) reliée à une partie arrière de la partie de préhension droite (42) et fixée à l'élément de croisement (26), et
la partie de fixation droite avant (46) de la poignée de saisie droite (9R) est reliée à une partie avant de la partie de préhension droite (42) et fixée au cadre de support droit (25),
l'extrémité avant de la partie de préhension gauche (41) est positionnée à l'avant de la partie de fixation gauche, et
l'extrémité avant de la partie de préhension droite (42) est positionnée à l'avant de la partie de fixation droite.

7. Véhicule à enfourcher selon la revendication 5 ou 6, **caractérisé en ce que** la partie de fixation gauche (43) inclut une forme incurvée vers le haut et **en ce que** la partie de fixation droite (44) inclut une forme incurvée vers le haut.

8. Véhicule à enfourcher selon au moins l'une des revendications 5 à 7, **caractérisé en ce que** la partie de fixation gauche (43) inclut une forme s'étendant vers l'arrière à partir de l'élément de croisement (26) et **en ce que** la partie de fixation droite (44) inclut une forme s'étendant vers l'arrière à partir de l'élément de croisement (26).

9. Véhicule à enfourcher selon au moins l'une des revendications 4 à 8, **caractérisé en ce que** le casier arrière (33) est placé entre la partie de préhension gauche (41) et la partie de préhension droite (42).

10. Véhicule à enfourcher selon au moins l'une des revendications 1 à 9, **caractérisé en ce que** le casier gauche (31) inclut une partie de découpe gauche (313) dans laquelle une partie finale est insérée, appartenant à la partie de préhension gauche (41), et
le casier droit (32 incluent une partie de découpe droite (323) dans laquelle une partie finale est insérée, appartenant à la partie de préhension droite (42).

11. Véhicule à enfourcher selon la revendication 10, **caractérisé en ce qu'**une ligne formant limite entre le casier arrière (33) et le casier gauche (31) est positionnée à la droite d'une extrémité gauche de la partie de découpe gauche (313), et
une ligne formant limite entre le casier arrière (33) et le casier droit (32) est positionnée à la gauche d'une extrémité droite de la partie de découpe droite (323).

12. Véhicule à enfourcher selon au moins l'une des revendications 1 à 11, **caractérisé en ce que** l'élément de croisement (26) inclut une forme de type plaque.

13. Véhicule à enfourcher selon au moins l'une des revendications 1 à 12, **caractérisé en ce que** l'élément de croisement (26) est fixé à l'extrémité arrière du cadre de support gauche (24) et à l'extrémité arrière du cadre de support droit (25), l'extrémité arrière de l'élément de croisement (26) étant de préférence positionnée vers l'arrière des extrémités arrière du cadre de support gauche (24) et du cadre de support droit (25).

14. Véhicule à enfourcher selon au moins l'une des revendications 1 à 13, **caractérisé en ce que** des parties arrière du cadre de support gauche (24) et du cadre de support droit (25) incluent des formes incurvées vers le haut.

15. Véhicule à enfourcher selon au moins l'une des revendications 1 à 14, **caractérisé en ce qu'**un élément de fixation destiné à fixer le casier arrière (33) et l'élément de croisement (26), se trouvant dans la partie destinée de fixation, est placé à l'avant du casier arrière (33).
